Europäisches Patentamt

European Patent Office

Office européen des brevets

(11) Publication number: **0 228 378**
**B1**

(12) **EUROPEAN PATENT SPECIFICATION**

(45) Date of publication of patent specification: **11.04.90**

(51) Int. Cl.⁵: **C 09 D 5/16**

(21) Application number: **85905416.5**

(22) Date of filing: **23.10.85**

(86) International application number:
**PCT/GB85/00487**

(87) International publication number:
**WO 86/02660 09.05.86 Gazette 86/10**

(54) **ANTI-FOULING PAINT.**

(30) Priority: **24.10.84 GB 8426919**

(43) Date of publication of application:
**15.07.87 Bulletin 87/29**

(45) Publication of the grant of the patent:
**11.04.90 Bulletin 90/15**

(84) Designated Contracting States:
**DE FR IT NL SE**

(56) References cited:
**EP-A-0 069 559**

**Patent Abstracts of Japan, Vol. 4, no.113
(C-21)(595), 13.08.80 & JP, A, 5569662
Patents Abstracts of Japan, vol.7, no. 225,
(C-189)(1370), 06.10.83 & JP,A, 58120678**

(73) Proprietor: **COURTAULDS COATINGS LIMITED
18 Hanover Square
London W1A 2BB (GB)**

(72) Inventor: **MILLICHAMP, Ian, Stuart
55 Redesdale Gardens Dunston, Gateshead
Tyne and Wear NE11 9XH (GB)**
Inventor: **REEDER, Frank
50 Front Street
Whitburn Near Sunderland SR6 7JF (GB)**

(74) Representative: **Hale, Stephen Geoffrey et al
J.Y. & G.W. Johnson Furnival House 14/18 High
Holborn
London WC1V 6DE (GB)**

Courier Press, Leamington Spa, England.

**Description**

The invention is concerned with self-polishing anti-fouling paints. An anti-fouling paint is used as a top coat paint on ships' hulls to inhibit the settlement and growth of marine organisms such as barnacles and algae, generally by release of a biocide for the marine organisms. A self-polishing anti-fouling paint binder is gradually dissolved away from the hull surface, as the ship moves through sea water, in such a way that the paint surface at least preserves its initial smoothness and may become smoother.

Hitherto, self-polishing anti-fouling paints have used as binders linear polymers containing pendent side groups (hereinafter referred to as "Leaving Groups") which are liberated from the polymer by reaction with sea water, the residual polymer being sufficiently dispersible or soluble in sea water to be swept from the paint surface, exposing a fresh layer of the binder able to undergo a similar reaction with sea water. The gradual thinning of the paint film controls the release of a biocide active against fouling and present as a pigment in the paint or as a Leaving Group. Currently, the only commercially significant paints of this kind use binders which are copolymers of tributyltin methacrylate in which the Leaving Group is tributyltin, itself a biocide. Examples of such paints are described in GB—A—1,457,590 and US—A— 4,191,579.

There have been proposals to replace the tributyltin Leaving Group of a self-polishing copolymer with a different Leaving Group, and, as the biocidal requirements of the paint may be satisfied by a biocidal pigment, it has been realised that it is not necessary that an alternative Leaving Group be biocidal. EP—A—51930, EP—A—69559 and WO 84/02915 make such proposals.

In EP—A—69559 there is disclosed a marine paint comprising a film-forming copolymer which is a copolymer containing 20 to 80 percent by weight of units of a quinolinyl or substituted quinolinyl ester of an olefinically unsaturated carboxylic acid, the balance of the copolymer being units of at least one olefinically unsaturated comonomer, and a metalliferous pigment which is sparingly soluble in sea-water and may be a biocide for marine organisms. In such a paint the quinolinyl or substituted quinolinyl group is the Leaving Group and the paint generates a water-soluble residue by slow exchange of these groups in the polymer for metal ions present in sea-water, forming metal carboxylate salt groups which cause the paint to be smoothed away in relatively moving sea-water. The olefinically unsaturated comonomer(s) can be selected from a wide variety of acrylic and vinyl monomers and the polymer can also contain monomer units conferring increased water-reactivity, for example up to 20 per cent by weight of maleic or itaconic anhydride, acrylamide, methacrylamide or N-vinylpyrrolidone units or up to 5 per cent by weight (but preferably 2 per cent by weight or less) of acrylic, methacrylic or itaconic acid units, although no such copolymers are prepared or tested in the Examples. Moreover it is stated that care must be taken to avoid gelation of the paint when using a copolymer containing free acid monomer units.

We have found binders for self-polishing ant-fouling paints requiring no Leaving Group. These binders are characterised by a substantial content of free carboxylic acid groups attached to the binder polymer.

According to the present invention a self-polishing anti-fouling paint comprises a biocide for marine organisms and a film-forming polymeric binder which is a linear addition polymer of an olefinically unsaturated carboxylic acid and has an equivalent weight of from 240 to 750, preferably from 240 to 700 (calculated as acid groups).

Anti-fouling paints based on rosin are well known and are described for example in the book "Marine Fouling and its Prevention" published by United States Naval Institute in 1952. Rosin is a carboxylic-acid-functional material but is not a linear polymer and cannot be used as the binder of a self-polishing paint. It erodes in sservice to form a brittle matrix of spent rosin which, although it may be gradually washed from the hull surface by sea water, increases in roughness over time. The paints of the present invention also have the advantage that the linear addition polymer forms a tougher and more coherent film.

The principle of known success binders of self-polishing paints is that a substantially non-ionic polymer having negligible solubility in sea water is changed by reaction with sea water into an ionic polymer able to dissolve or to be dispersed in sea water at the desired rate. The known binders accomplish this with the help of Leaving Groups. We believe that in the paints of the present invention the carboxylic acid groups of the binder are substantially non-ionic in the body of the paint film, but become carboxylate ions at the interface of the paint film and sea water. Surprisingly, the binders which characterise the paints according to the invention do not swell unduly in sea water. Polymer films from such binders immersed in sea water for up to 6 months reganined their initial hardness when dried and showed no cracking or whitening.

The binder for the paints of the present invention is an addition polymer of one or more olefinically unsaturated acids, for example acrylic acid, methacrylic acid, maleic acid, fumaric acid, itaconic acid, vinylbenzoic acid (e.g. p-vinylbenzoic acid), 3-butenoic acid or beta-carboxyethyl acrylate or methacrylate, where appropriate with at least one olefinically unsaturated comonomer. Copolymers of methacrylic acid or acrylic acid are preferred.

Examples of suitable comonomers include acrylic monomers, for example an acrylic or methacrylic ester, acrylamide or acrylonitrile, and vinyl monomers, for example vinyl acetate, vinyl butyrate, vinyl chloride, styrene, vinyl pyridine, N-vinyl pyrrolidone or vinylidene chloride. Binders which are terpolymers may be preferred, for example methyl methacrylate which tends to form a hard film can be used in conjunction with an acrylate such as ethyl acrylate or particularly an alkyl acrylate of 3 to 8 carbon atoms in the alkyl moiety such as butyl acrylate which helps to form a more flexible film. Substituted acrylate esters, for example hydroxyethyl acrylate or methacrylate, may be used as one of the comonomers. We have found that the use of styrene as a comonomer tends to retard the rate of dissolution of the paint in sea water; it may be preferred to include styrene as a comonomer in binders having a high proportion of acid groups, for example having an equivalent weight of 240 to 440.

The preferred molecular weight for the copolymer binders for the paints of the present invention is 30,000—100,000, most preferably 40,000—90,000. This is higher than has generally been used for anti-fouling paints, for example organotin self-polishing paints, but these higher molecular weights have been found to give the best combination of resistance to swelling in water with self-polishing properties. The equivalent weight of the binder is most preferably in the range from 300 to 550. The proportion of units derived from an olefinically unsaturated acid in the copolymer is generally in the range from about 10 to about 35 per cent by weight, preferably 13 to 30 per cent by weight, most preferably 15 to 25 per cent by weight, for acrylic or methacrylic acid.

Such a binder is preferably made by copolymerising the olefinically unsaturated acid and the comonomer(s), preferably in solution in a solvent for the copolyer, using a free radical initiator. Preferred solvents are alcohols, for example butan-1-ol, pentan-1-ol, or butan-2-ol, or mixtures thereof with up to an equal volume of an aromatic hydrocarbon such as xylene. Ether alcohols and their esters can be used, for example methoxypropanol, methoxypropyl acetate, ethoxyethanol or ethoxyethyl aceate, as can esters such as butyl acetate and ketones such as methyl isobutyl ketone. Any of the conventional initiators can be used, for example an azo compound such as azobisisobutyronitrile or a peroxide.

The anti-fouling paint preferably contains a metalliferous pigment which is sparingly soluble in sea water or is a substantially water-insoluble pigment capable of reacting with sea water. The pigment is preferably a marine biocide, for example cuprous thiocyanate, cuprous oxide, zinc oxide, zinc ethylene bis(dithiocarbamate) or cuprous ethylene bis(dithiocarbamate). These pigments produce water-soluble metal compounds on reaction with sea water so that the pigment particles do not survive at the paint surface. Preferably, the pigment has a solubility in sea water of from 1 to 10 parts per million by weight. The pigment has the effect of inducing the overall smoothing which the relatively moving sea water exerts on the paint film, minimising localised erosion and preferentially removing excrescences formed during application of the paint.

Cuprous thiocyanate and zinc ethylene bis(dithiocarbamate) are the preferred pigments for use in the present invention. The binders which characterise the paints of the present invention may be unstable in the presence of some sea-water-reactive pigments, for example zinc oxide or cuprous oxide. These pigments may be rendered insensitive to the binders by micro-encapsulation in or coating with a polymer labile to sea water. For example, the pigments may be reacted with a dilute solution of a polycarboxylic acid copolymer such as one of the binders which characterise the paints of the present invention or with a pigment dispersant such as 'Solsperse', and the reaction product then separated from the solution and incorporated with the binder in formulating the paint. Alternatively, the active sites on the surface of the pigment particles may be rendered unreactive to the binder by treatment with a complexing agent such as an oxalate or a titanate ester or titanyl complex, for example titanium acetylacetonate.

The paint composition may additionally contain a pigment which is highly insoluble in sea water (solubility below 1 ppm by weight), such as titanium dioxide, ferric oxide or talc. Such highly insoluble pigments can be used in proportions up to 50 per cent by weight of the total pigment component of the paint. The highly insoluble pigment has the effect of retarding the dissolution of the paint. Alternatively, the paint can contain a hydrophobic organic retarder of the type defined in British Patent No. 1,457,590.

The biocide for marine organisms used in the paint of the present invention is preferably a metalliferous pigment as described above, particularly a copper compound such as cuprous thiocyanate or a dithiocarbamate such as zinc ethylene bis(dithiocarbamate) or cuprous ethylene bis(dithiocarbamate). The paint can contain an added biocide or biocides effective against algae, sea weed, barnacles and/or diatoms. Triorganotin salts and oxides such as triphenyltin fluoride, tributyltin fluoride, tributyltin dibromosuccinate, triphenyltin chloride, triphenytin hydroxide and tributyltin oxide are effective marine biocides and can be used in paints according to the invention, although for environmental reasons it may be desired to avoid the use of triorganotin compounds. Examples of other biocides effective as marine antifouling agents are dithiocarbamate derivatives such as 2-(N,N-dimethyl thiocarbamoylthio)-5-nitro thiazole or tetramethyl thiuram disulphide, substituted isothiazolones and dichloro diphenyl trichloroethane.

The invention is illustrated by the following Examples:—

Examples 1 to 6

Methacrylic acid, methyl methacrylate and butyl acrylate were copolymerised at 75°C for 4 hours in solution in butan-1-ol at 40 weight per cent solids using azobisisobutyronitrile initiator. A series of copolymers containing different acid levels was prepared. The apparent molecular weight of each copolymer was measured by gel permeation chromatography against polystyrene. The Table shows the composition and molecular weight of the copolymers formed.

3

Percent by Weight in Copolymer

| Example No. | Methacrylic Acid | Methyl Methacrylate | Butyl Acrylate | Molecular Weight | Equivalent Weight |
|---|---|---|---|---|---|
| 1 | 16.0 | 43.2 | 40.8 | 60000 | 538 |
| 2 | 12.0 | 47.3 | 40.6 | 80000 | 717 |
| 3 | 13.1 | 46.2 | 40.7 | 80000 | 657 |
| 4 | 18.7 | 40.3 | 41.0 | 80000 | 460 |
| 5 | 22.9 | 35.9 | 41.2 | 90000 | 376 |
| 6 | 24.7 | 33.9 | 41.4 | 80000 | 348 |

Films of pencil hardness HB could be cast from each of the polymer solutions formed.

Example 7

The polymer solution of Example 1 was blended with pigments and additional solvent to give a marine anti-fouling paint of the following composition:—

| | Per cent by Weight |
|---|---|
| Polymer of Example 1 | 24.4 |
| Butan-1-ol | 53.6 |
| Zinc ethylene bis(dithiocarbamate) | 12.3 |
| Talc | 5.2 |
| Titanium Dioxide | 2.3 |
| Structuring Agents | 1.7 |
| Phthalocyanine Pigment | 0.4 |

The smoothing performance of this paint was tested using the apparatus described in British Patent No. 1,457,590 with reference to Figures 7a and 7b. The paint of Example 7 was tested by comparison with a commercially successful organotin copolymer paint. The paint of Example 7 was seen to be gradually smoothed away by movement through sea water. Its rate of dissolution was 0.40 times that of the commercial organotin copolymer paint.

Examples 8 to 12

Paints were made up from the binders of Examples 2 to 6 in the same manner as in Example 7. The resulting paints were found to be gradually smoothed away in sea water, the rate of dissolution increasing with increasing acid content of the copolymer binder.

**Claims**

1. A self-polishing anti-fouling paint comprising a biocide for marine organisms and a film-forming polymeric binder, characterised in that the binder is a linear addition polymer of an olefinically unsaturated carboxylic acid and has an equivalent weight of from 240 to 750 (calculated as acid groups).

2. A paint according to claim 1, characterised in that the binder polymer has an equivalent weight of from 240 to 700.

3. A paint according to claim 2, characterised in that the binder polymer has an equivalent weight of from 300 to 550.

4. A paint according to any of claims 1 to 3, characterised in that the binder is an addition copolymer of acrylic acid or methacrylic acid.

5. A paint according to claim 4, characterised in that the copolymer is a terpolymer composed of units

4

of acrylic or methacrylic acid, methyl methacrylate and an alkyl acrylate having 3 to 8 carbon atoms in the alkyl group.

6. A paint according to claim 4 or 5, characterised in that the binder copolymer contains 13 to 30 per cent by weight of acrylic or methacrylic acid units.

7. A paint according to claim 6, characterised in that the binder copolymer contains 15 to 25 per cent by weight of acrylic or methacrylic acid units.

8. A paint according to any of claims 1 to 4, characterised in that the binder polymer has an equivalent weight of from 240 to 440 and includes styrene as a comonomer.

9. A paint according to any of claims 1 to 8, characterised in that the molecular weight of the binder polymer is from 30,000 to 100,000.

10. A paint according to claim 9, characterised in that the molecular weight of the binder polymer is from 40,000 to 90,000.

11. A paint according to any of claims 1 to 10, characterised in that the biocide comprises a metalliferous pigment which is sparingly soluble in sea-water or is a substantially water-insoluble metallifous pigment capable of reacting with sea-water.

12. A paint according to claim 11, characterised in that the pigment is cuprous thiocyanate.

13. A paint according to claim 11, characterised in that the pigment is zinc ethylene bis (dithiocarbamate).

14. A paint according to claim 11, characterised in that the pigment is cuprous oxide or zinc oxide microencapsulated in or coated with a polymer labile to sea-water.

15. A paint according to according to any of claims 1 to 4 or 6 to 14, characterised in that the binder polymer contains no Leaving Groups.

**Patentansprüche**

1. Selbstpolierender fäulnisverhütender Anstrich mit einem Biozid gegen Meeresorganismen und einem filmbildenden polymeren Bindemittel, dadurch gekennzeichnet, daß das Bindmittel ein lineares Additionspolymer einer olefinisch ungesättigten Carbonsäure darstellt und ein Äquivalentgewicht von 240 bis 750 (berechnet als Säuregruppen) besitzt.

2. Anstrich nach Anspruch 1, dadurch gekennzeichnet, daß das Bindemittelpolymer ein Äquivalentgewicht von 240 bis 700 besitzt.

3. Anstrich nach Anspruch 2, dadurch gekennzeichnet, daß das Bindemittelpolymer ein Äquivalentgewicht von 300 bis 550 besitzt.

4. Anstrich nach einem der Ansprüche 1 bis 3, dadurch gekennzeichnet, daß das Bindemittel ein Additionscopolymer von Acrylsäure oder Methacrylsäure darstellt.

5. Anstrich nach Anspruch 4, dadurch gekennzeichnet, daß das Copolymer ein Terpolymer aus Acrylsäure- oder Methacrylsäure-, Methylmethacrylat- und Alkylacrylateinheiten mit 3 bis 8 Kohlenstoffatomen in der Alkylgruppe darstellt.

6. Anstrich nach Anspruch 4 oder 5, dadurch gekennzeichnet, daß das Bindemittelcopolymer 13 bis 30 Gewichtsprozent an Acryl- oder Methacrylsäureeinheiten enthält.

7. Anstrich nach Anspruch 6, dadurch gekennzeichnet, daß das Bindemittelcopolymer 15 bis 25 Gewichtsprozent an Acryl- oder Methacrylsäureeinheiten enthält.

8. Anstrich nach einem der Ansprüche 1 bis 4, dadurch gekennzeichnet, daß das Bindemittelpolymer ein Äquivalentgewicht von 240 bis 440 besitzt und Styrol als Comonomer enthält.

9. Anstrich nach einem der Ansprüche 1 bis 8, dadurch gekennzeichnet, daß das Molekulargewicht des Bindemittelpolymers zwischen 30.000 und 100.000 beträgt.

10. Anstrich nach Anspruch 9, dadurch gekennzeichnet, daß das Molekulargewicht des Bindemittelpolymers zwischen 40 000 und 90 000 beträgt.

11. Anstrich nach einem der Ansprüche 1 bis 10, dadurch gekennzeichnet, daß das Biozid aus einem metallhaltigen, in Meerwasser schwerlöslichem Pigment besteht oder ein praktisch wasserunlösliches metallhaltiges, mit Meerwasser reaktionsfähiges Pigment darstellt.

12. Anstrich nach Anspruch 11, dadurch gekennzeichnet, daß das Pigment aus Kupfer(I)-thiocyanat besteht.

13. Anstrich nach Anspruch 11, dadurch gekennzeichnet, daß das Pigment aus Zink-ethylenbis(dithio-carbamat) besteht.

14. Anstrich nach Anspruch 11, dadurch gekennzeichnet, daß das Pigment aus Kupfer(I)-oxid oder Zinkoxid besteht, das in einem gegenüber Meerwasser labilen Polymer mikroverkapselt ist oder damit beschichtet ist.

15. Anstrich nach einem der Ansprüche 1 bis 4 oder 6 bis 14, dadurch gekennzeichnet, daß das Bindemittelpolymer keine Abgangsgruppen enthält.

**Revendications**

1. Peinture antisalissure autolissante comprenant un biocide pour organismes marins et un liant polymère filmogène, caractérisée en ce que le liant est un polymère d'addition linéaire d'un acide

5

carboxlique à insaturation oléfinique et a un poids équivalent de 240 à 750 (calculé en groupes acides).

2. Peinture selon la revendication 1, caractérisée en ce que le polymère liant a un poids équivalent de 240 à 700.

3. Peinture selon la revendication 2, caractérisée en ce que le polymère liant a un poids équivalent de 300 à 550.

4. Peinture selon l'une quelconque des revendications 1 à 3, caractérisée en ce que le liant est un copolymère d'additon d'acide acrylique ou d'acide méthacrylique.

5. Peinture selon la revendication 4, caractérisée en ce que le copolymère est un terpolymère composé de motifs d'acide acrylique ou d'acide méthacrylique, de méthacrylate de méthyle et d'un acrylate d'alkyle comportant 3 à 8 atomes de carbone dans le groupe alkyle.

6. Peinture selon la revendication 4 ou 5, caractérisée en ce que le copolymère liant contient 13 à 30% en poids de motifs d'acide acrylique ou méthacrylique.

7. Peinture selon la revendication 6, caractérisée en ce que le copolymère liant contient 15 à 25% en poids de motifs d'acide acrylique ou méthacrylique.

8. Peinture selon l'une quelconque des revendications 1 à 4, caractérisée en ce que le polymère liant a un poids équivalent de 240 à 440 et contient du styrène comme comonomère.

9. Peinture selon l'une quelconque des revendications 1 à 4, caractérisée en ce que le poids moléculaire du polymère liant est de 30 000 à 100 000.

10. Peinture selon la revendication 9, caractérisée en ce que le poids moléculaire du polymère liant est de 40 000 à 90 000.

11. Peinture selon l'une quelconque des revendications 1 à 10, caractérisée en ce que le biocide comprend un pigment métallifère qui est peu soluble dans l'eau de mer ou est un pigment métallifère pratiquement insoluble dans l'eau capable de réagir avec l'eau de mer.

12. Peinture selon la revendication 11, caractérisée en ce que le pigment est le thiocyanate cuivreux.

13. Peinture selon la revendication 11, caractérisée en ce que le pigment est l'éthylène-bis(dithiocarbamate) de zinc.

14. Peinture selon la revendication 11, caractérisée en ce que le pigment est l'oxyde cuivreux ou l'oxyde de zinc micro-encapsulé ou enrobé avec un polymère labile à l'eau de mer.

15. Peinture selon l'une quelconque des revendications 1 à 4 ou 6 à 14, caractérisée en ce que le polymère liant ne contient pas de groupes partants.